# EUROPÄISCHE PATENTANMELDUNG

(11) **EP 1 053 721 A1**
(43) Veröffentlichungstag der Anmeldung: **22.11.2000**
(21) Anmeldenummer: 00109993.6
(22) Anmeldetag: 11.05.2000
(51) Int. Cl.: A61C 17/28, A61C 17/36

(54) **Zahnbürstenaufsatz**

(30) Priorität: 18.05.1999 DE 29908708 U
(71) Anmelder: Thielen Feinmechanik GmbH & Co. Fertigungs KG, 83487 Marktschellenberg (DE)
(72) Erfinder: Thielen, Klaus, 83471 Schönau (DE)
(74) Vertreter: Manitz, Finsterwald & Partner

(57) **Zusammenfassung**

Die Erfindung betrifft einen Zahnbürstenaufsatz für eine Mundhygieneeinrichtung. Der Zahnbürstenaufsatz weist einen Bürstenhals, an dem eine Kupplung zum Ankuppeln an eine Antriebseinheit der Mundhygieneeinrichtung ausgebildet ist, einen Bürstenkopf am freien Ende des Bürstenhalses, an dem mindestens ein antreibbarer Bürsteneinsatz gelagert ist, und eine Getriebeeinheit für den Bürsteneinsatz auf, die zum Übertragen der Antriebsleistung der Antriebseinheit von der Kupplung an den Bürsteneinsatz dient. Der Bürsteneinsatz ist mit einem Bewegungswinkel von mindestens 180° um seine Rotationsachse von der Getriebeeinheit antreibbar.

## Beschreibung

Die Erfindung betrifft einen Zahnbürstenaufsatz für eine Mundhygieneeinrichtung, insbesondere eine Mundhygienestation, mit einem Bürstenhals, an dem eine Kupplung zum Ankuppeln an eine Antriebseinheit der Mundhygieneeinrichtung ausgebildet ist, mit einem Bürstenkopf am freien Ende des Bürstenhalses, an dem mindestens ein antreibbarer Bürsteneinsatz gelagert ist, und mit einer Getriebeeinheit für den Bürsteneinsatz zum Übertragen der Antriebsleistung der Antriebseinheit von der Kupplung an den Bürsteneinsatz. Ferner betrifft die Erfindung eine Mundhygieneeinrichtung mit einem derartigen Zahnbürstenaufsatz.

Ein Zahnbürstenaufsatz der eingangs genannten Art ist bekannt und wird üblicherweise als austauschbarer Aufsatz für eine elektrische Zahnbürste verwendet. Der zum Beispiel drehbar gelagerte Bürsteneinsatz, der die Borsten der Zahnbürste trägt, soll durch seine zusätzliche Bewegung die Reinigungswirkung der Borsten während des Putzens der Zähne verbessern.

Ausgehend von diesem Stand der Technik ist es Aufgabe der Erfindung, einen Zahnbürstenaufsatz für eine Mundhygieneeinrichtung bzw. eine Mundhygieneeinrichtung mit einem derartigen Zahnbürstenaufsatz bereitzustellen, durch dessen bzw. durch deren Verwendung bei verglichen mit herkömmlichen Zahnbürstenaufsätzen gleicher Reinigungsleistung die Zahnreinigung schonender erfolgt.

Die Erfindung löst die Aufgabe durch einen Zahnbürstenaufsatz mit den Merkmalen nach Anspruch 1, insbesondere löst sie die Aufgabe dadurch, daß der Bürsteneinsatz mit einem Bewegungswinkel von mindestens 180° um seine Rotationsachse von der Getriebeeinheit antreibbar ist.

Ferner wird die Aufgabe durch eine Mundhygieneeinrichtung mit den Merkmalen nach Anspruch 18 gelöst, die einen derartigen Zahnbürstenaufsatz verwendet.

Bei der Erfindung wird durch den großen Bewegungswinkel des Bürsteneinsatzes erreicht, daß dieselbe Stelle des zu reinigenden Zahnes innerhalb einer vorgegebenen Zeiteinheit von mehr Borsten gereinigt wird als bei einem herkömmlichen Zahnbürstenaufsatz mit einem Bürsteneinsatz, dessen Bewegungswinkel deutlich geringer ist. Durch den häufigeren Kontakt verschiedener Borsten mit der zu reinigenden Stelle wird erreicht, daß am Zahn anhaftende Verunreinigungen von den Borsten abgetragen und wegtransportiert werden, ohne daß dieselben Borsten bereits abtransportierte Verschmutzungen erneut zur gerade gereinigten Stelle zurücktransportieren. Unabhängig davon ist es möglich, bei verglichen mit bekannten Zahnbürstenaufsätzen gleicher Putzleistung die Rotationsgeschwindigkeit des Bürsteneinsatzes zu reduzieren, so daß die Borsten mit langsameren Bewegungen an der Zahnoberfläche und dem Zahnfleischrand entlanggleiten, wodurch eine besonders schonende Zahnreinigung möglich ist.

Weitere vorteilhafte Weiterbildungen der Erfindung ergeben sich aus der nachfolgenden Beschreibung, der Zeichnung sowie den Unteransprüchen.

So ist bei einer besonders bevorzugten Ausführungsform des Zahnbürstenaufsatzes mindestens ein weiterer Bürsteneinsatz am Bürstenkopf drehbar gelagert. Durch diesen weiteren Bürsteneinsatz kann die Putzleistung des Zahnbürstenaufsatzes verglichen mit bekannten Zahnbürstenaufsätzen, die nur einen Bürsteneinsatz verwenden, weiter gesteigert werden.

Der weitere Bürsteneinsatz ist vorzugsweise gleichfalls von derselben Getriebeeinheit angetrieben wie der erste Bürsteneinsatz, so daß auf eine zusätzliche Getriebeeinheit am Zahnbürstenaufsatz verzichtet werden kann.

Ferner ist es bei dem Zahnbürstenaufsatz mit zwei Bürsteneinsätzen von Vorteil, wenn die beiden Bürsteneinsätze gegenläufig zueinander antreibbar sind, sich also im angetriebenen Zustand in entgegengesetzte Rotationsrichtungen drehen. Auf diese Weise werden Unwuchten während der Drehung der Bürsteneinsätze ausgeglichen und ein vibrationsarmer Lauf der Bürsteneinsätze gewährleistet.

Bei einer bevorzugten Weiterbildung des Zahnbürstenaufsatzes weist die Getriebeeinheit eine sich in Längsrichtung des Bürstenhalses erstreckende Zahnstange auf, die mit ihrem einen Ende zum Hin- und Herbewegen in ihrer Längsrichtung an die Antriebseinheit ankuppelbar ist. Nahe ihrem anderen Ende weist die Zahnstange eine Verzahnung auf, die mit einem Antriebsrad für den Bürsteneinsatz in Eingriff steht. Bei der Ausführungsform mit zwei Bürsteneinsätzen kann für jeden Bürsteneinsatz ein eigenes Antriebsrad vorgesehen sein. Alternativ ist es auch denkbar, die beiden Bürsteneinsätze durch ein gemeinsames Antriebsrad anzutreiben. Durch die Verwendung der mit dem Antriebsrad bzw. den Antriebsrädern in Eingriff stehenden Zahnstange als Getriebeeinheit ist ein besonders ruhiger Lauf des Bürsteneinsatzes bzw. der Bürsteneinsätze möglich.

Das Antriebsrad kann unmittelbar am Bürsteneinsatz ausgebildet sein. Alternativ ist das Antriebsrad starr mit einem Übersetzungsrad verbunden und gemeinsam mit diesem auf einem am Bürstenkopf vorgesehenen Lagerstift drehbar gelagert. Das Übersetzungsrad steht mit einer an der dem Bürstenkopf zugewandten Unterseite des Bürsteneinsatzes ausgebildeten Verzahnung in Eingriff. Durch entsprechende Dimensionierung des Übersetzungsrades, des Antriebsrades und der Verzahnung können unterschiedliche Übersetzungsverhältnisse realisiert werden, so daß Zahnbürstenaufsätze mit unterschiedlich schnell drehenden Bürsteneinsätzen gefertigt werden können.

Bei einer alternativen Ausführungsform weist die Getriebeeinheit für den Antrieb des Bürsteneinsatzes bzw. der Bürsteneinsätze einen Antriebsriemen auf, der um eine im Bürstenkopf des Zahnbürstenaufsatzes vorgesehene Umlenkstelle geführt ist. Der Antriebsriemen steht seinerseits mit dem Bürsteneinsatz bzw. mit den Bürsteneinsätzen in Wirkverbindung, um diesen bzw. diese anzutreiben. Durch Verwendung eines Antriebsriemens als Antriebselement für den Bürsteneinsatz bzw. die Bürsteneinsätze können eventuell bestehende Maßungenauigkeiten auf einfache Weise ausgeglichen und gleichzeitig ein besonders ruhiger Lauf des Bürsteneinsatzes bzw. der Bürsteneinsätze während des Betriebes gewährleistet werden.

Der Antriebsriemen ist zum Antrieb des Bürsteneinsatzes bzw. der Bürsteneinsätze vorzugsweise zumindest abschnittsweise verzahnt, wobei der verzahnte Abschnitt mit einer an dem Bürsteneinsatz bzw. an jedem Bürsteneinsatz ausgebildeten Verzahnung in Eingriff steht. Hierdurch wird eine definierte Kraftübertragung auf den Bürsteneinsatz bzw. die Bürsteneinsätze erreicht.

Bei einer bevorzugten Weiterbildung dieser alternativen Ausführungsform weist die Getriebeeinheit eine im Bürstenhals des Zahnbürstenaufsatzes schwenkbar gelagerte Wippe auf, die mit dem Antriebsriemen in Wirkverbindung steht. Durch eine Schwenkbewegung der Wippe um deren Lagerstelle wird der um die Umlenkstelle geführte Antriebsriemen um einen vorgegebenen Maß hin- und herbewegt, wodurch sich eine definierte Rotationsbewegung des Bürsteneinsatzes bzw. der Bürsteneinsätze auf einfache Weise ergibt.

Der Bürsteneinsatz ist bei beiden Ausführungsformen vorzugsweise in einer Aufnahme gehalten, die am Bürstenkopf ausgebildet ist, wobei mindestens drei, vorzugsweise gleichmäßig über den Umfang der Aufnahme verteilte Rasthaken, die mit einer am Bürsteneinsatz ausgebildeten Rastnut in Eingriff stehen, den Bürsteneinsatz in der Aufnahme drehbar halten. Durch diese Art der Befestigung des Bürsteneinsatzes in der Aufnahme ist eine sichere Lagerung des Bürsteneinsatzes gewährleistet, die einfach herzustellen und problemlos zu montieren ist.

Aus hygienischen Gründen wird bei dieser Ausführungsform mit Rasthaken zusätzlich vorgeschlagen, am Bürstenkopf Reinigungskanäle auszubilden, die von der der Aufnahme abgewandten Rückseite des Bürstenkopfes ausgehen, sich durch den Bürstenkopf erstrecken und in die Aufnahme münden, wobei vorzugsweise jeweils ein Reinigungskanal einem Rasthaken zugeordnet ist und nahe diesem endet. Zum Reinigen des Zahnbürstenaufsatzes muß dieser nur in einen Wasserstrahl gehalten werden, wobei das durch die Reinigungskanäle strömende Wasser den Zwischenraum zwischen Bürsteneinsatz und Aufnahme reinigt und so die Bildung von Bakterien in den Zwischenräumen zwischen dem Bürsteneinsatz und der Aufnahme verhindert wird.

Bei einer besonders bevorzugten Weiterbildung der Zahnbürstenaufsätze ist zusätzlich im Bürsteneinsatz mindestens ein Spülkanal ausgebildet, der sich durch den Bürsteneinsatz erstreckt und an der mit den Borsten versehenen Oberseite des Bürsteneinsatzes endet. Im Bürstenhals ist ein Zuführkanal ausgebildet, der im Bürstenkopf des Zahnbürstenaufsatzes endet und mit dem Spülkanal des Bürsteneinsatzes in Strömungsverbindung steht. Der Zuführkanal ist bei an die Mundhygieneeinrichtung angekuppeltem Zahnbürstenaufsatz an eine Pumpeneinheit der Mundhygieneeinrichtung angeschlossen. Mit Hilfe der Pumpeneinheit kann eine Reinigungsflüssigkeit durch den Zuführkanal in den Spülkanal des Bürsteneinsatzes gefördert werden. Durch die aus dem Spülkanal an der Oberseite des Bürsteneinsatzes austretende Reinigungsflüssigkeit wird der Zahnbereich sowie die Zahntaschen während der mechanischen Bürstenbewegung gleichzeitig gespült, wodurch Zahnpaste und andere Abriebsrückstände, wie beispielsweise Zahnbelag, beseitigt werden. Des weiteren werden durch das gleichzeitige Bürsten und Spülen des Zahnes und des Zahnfleischrandes die zwischen diesen ausgebildeten Zahntaschen ausgestreift und ausgespült.

Bei dieser Weiterbildung des Zahnbürstenaufsatzes mit zusätzlich integrierter Funktion einer Munddusche ist es besonders vorteilhaft, wenn die Lagerstelle des Bürsteneinsatzes als hohler Lagerzapfen ausgebildet ist, der mit dem Zuführkanal im Bürstenkopf in Strömungsverbindung steht, wobei der Lagerzapfen seinerseits mit dem Spülkanal im Bürsteneinsatz verbunden ist. Hierzu wird bei einer bevorzugten Ausführungsform vorgeschlagen, konzentrisch zur Rotationsachse des Bürsteneinsatzes in diesem einen Hohlraum auszubilden, der mit dem hohlen Lagerzapfen unmittelbar in Verbindung steht. Durch einen von der Unterseite des Bürsteneinsatzes ausgehenden, schräg durch diesen verlaufenden Versorgungskanal ist der Spülkanal wiederum mit dem Hohlraum verbunden.

Nachfolgend wird die Erfindung anhand zweier Ausführungsbeispiele unter Bezugnahme auf die Zeichnung näher erläutert. Darin zeigen:
- Fig. 1: eine perspektivische Darstellung eines Teils einer ersten Auführungsform eines Zahnbürstenaufsatzes mit zwei Bürsteneinsätzen,
- Fig. 2: eine teilweise geschnittene, vergrößerte Seitenansicht eines Bürstenkopfes des Zahnbürstenaufsatzes nach Fig. 1,
- Fig. 3: eine teilweise geschnittene vergrößerte Draufsicht auf den Bürstenkopf des Zahnbürstenaufsatzes nach Fig. 1,
- Fig. 4: eine perspektivische Darstellung einer zweiten Ausführungsform eines Zahnbürstenaufsatzes, und
- Fig. 5: eine perspektivische Schnittansicht des Zahnbürstenaufsatzes nach Fig. 4.

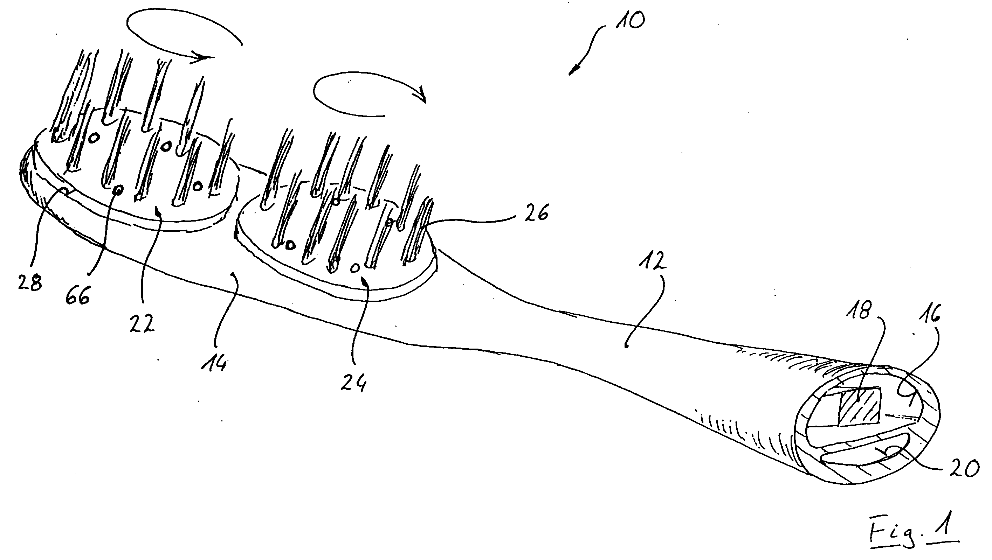

Fig. 1 zeigt in perspektivischer Darstellung einen Teil einer ersten Ausführungsform eines Zahnbürstenaufsatzes 10, der an eine Mundhygieneeinrichtung (nicht dargestellt) angekuppelt werden kann. Als Mundhygieneeinrichtung wird entweder ein stationärer Mundhygieneapparat oder ein Handapparat verwendet, der mit einer Antriebseinheit und einer Pumpeneinheit ausgestattet ist.

Der Zahnbürstenaufsatz 10 weist einen Bürstenhals 12 auf, an dessen einem freien Ende ein Bürstenkopf 14 ausgebildet ist. Im Bürstenhals 12 ist ein Kanal 16 ausgeformt, der sich in Längsrichtung des Bürstenhalses 12 bis zum Bürstenkopf 14 erstreckt. Der Kanal 16 dient als Führung für eine Zahnstange 18, deren Zweck später noch erläutert wird und die am geschnittenen Ende des Bürstenhalses 12 zu sehen ist. Benachbart zum Kanal 16 ist im Bürstenhals 12 ein Zuführkanal 20 ausgeformt, der sich gleichfalls in Längsrichtung des Bürstenhalses 12 bis zum Bürstenkopf 14 erstreckt und als Zuführung für eine Reinigungsflüssigkeit dient. Der Kanal 16 und der Zuführkanal 20 enden gemeinsam in einer Kupplungseinrichtung (nicht dargestellt), die am anderen Ende Bürstenhals 12 ausgebildet ist und mit der der Zahnbürstenaufsatz 10 an die Mundhygieneeinrichtung angekuppelt werden kann. Dabei wird die Zahnstange 18 in bekannter Weise mit der Antriebseinheit der Mundhygieneeinrichtung gekuppelt, während der Zuführkanal 20 mit der Pumpeneinheit der Mundhygieneeinrichtung für die Reinigungsflüssigkeit verbunden wird.

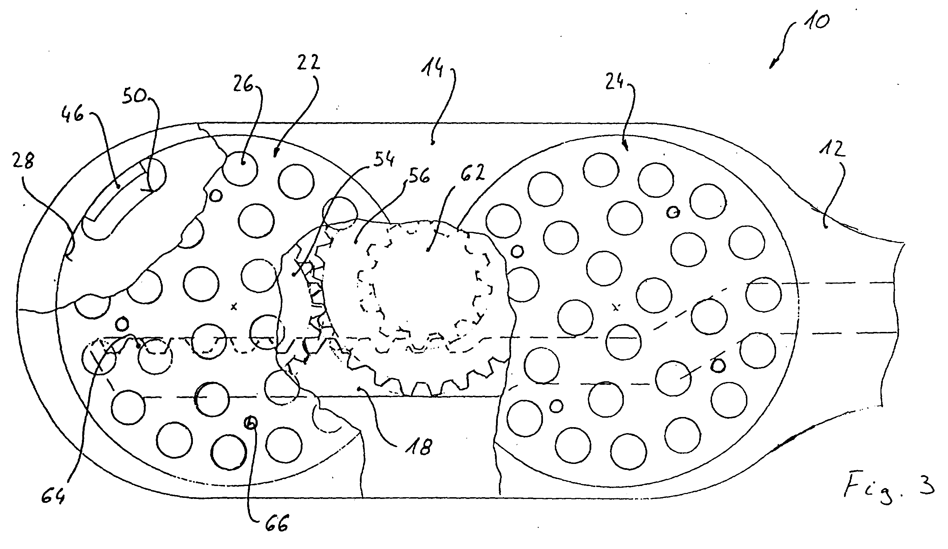

Am Bürstenkopf 14 sind zwei in Längsrichtung des Zahnbürstenaufsatzes 10 hintereinander angeordnete Bürsteneinsätze 22 und 24 drehbar gelagert, die identisch ausgebildet sind, so daß nachfolgend nur der in Fig. 1 links dargestellte vordere Bürsteneinsatz 22 sowie dessen Lagerung im Bürstenkopf 14 näher erläutert werden. Von der Oberseite des rotations-symmetrischen Bürsteneinsatzes 22 stehen mehrere Borstenbündel 26 nach oben ab, die, wie in Fig. 3 gezeigt, zu mehreren Gruppen zusammengefaßt und konzentrisch um einen gemeinsamen Mittelpunkt am Bürsteneinsatz 22 angeordnet sind, wobei die verschiedenen Gruppen unterschiedlichen radialen Abstand zum gemeinsamen Mittelpunkt aufweisen. Durch diese Art der Anordnung der Borstenbündel 26 wird eine gleichmäßig mit Borsten versehene Reinigungsoberfläche am Borsteneinsatz 22 gebildet.

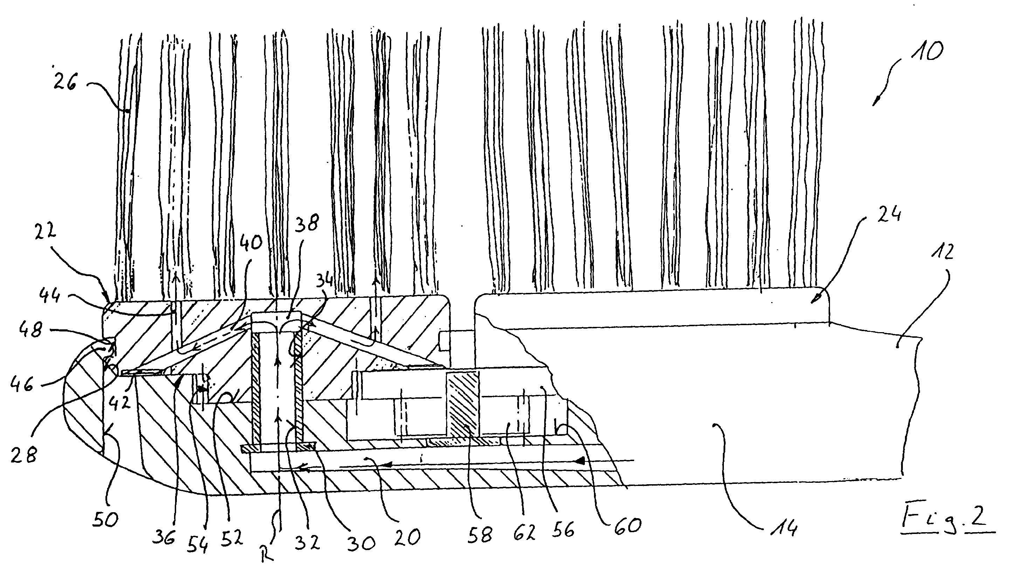

Wie Fig. 2 weiter zeigt, ist der Borsteneinsatz 22 in eine am Bürstenkopf 14 ausgebildete, kreisförmige Aufnahme 28 eingesetzt. In die Aufnahme 28 ragt ein in den Bürstenkopf 14 eingespritzter, hohler Lagerzapfen 30, dessen Stirnseite in etwa mit der Oberseite des Bürstenkopfes 14 fluchtet und dessen Durchgangsbohrung 32 mit dem Zuführkanal 20 in Verbindung steht. Der Bürsteneinsatz 22 weist eine Aufnahmebohrung 34 auf, mit der er auf den Lagerzapfen 30 aufgeschoben und an diesem um eine lotrecht zur Oberseite des Bürstenkopfes 14 verlaufende Rotationsachse R gelagert ist, wobei er sich mit seiner dem Bürstenkopf 14 zugewandten Unterseite 36 in der Aufnahme 28 abstützt.

Die als Sackloch ausgebildete Aufnahmebohrung 34 ist so bemessen, daß bei in die Aufnahme 28 eingesetztem Bürsteneinsatz 22 zwischen der Stirnseite des Lagerzapfens 30 und dem Ende der Aufnahmebohrung 34 ein Hohlraum 38 erhalten bleibt. In dem Hohlraum 38 enden insgesamt vier gleichmäßig über den Umfang des Bürsteneinsatzes 22 verteilte, schräg zur Rotationsachse R des Bürsteneinsatzes 22 radial verlaufende Versorgungskanäle 40, die von der Unterseite 36 des Bürsteneinsatzes 22 ausgehen. Das offene Ende jedes Versorgungskanals 40 an der Unterseite 36 des Bürsteneinsatzes 22 ist durch ein Verschlußelement 42 verschlossen, das bei der Herstellung des Bürsteneinsatzes 22 zunächst angespritzt und anschließend durch Einklappen und Verrasten, Verpressen, Verkleben oder Ultraschallverschweißen fest mit der Unterseite 36 verbunden worden ist, damit der jeweilige Versorgungskanal 40 zumindest annähernd fluiddicht verschlossen ist. In Richtung der Rotationsachse R des Bürsteneinsatzes 22 verlaufen ferner insgesamt vier Spülkanäle 44, die ausgehend von der Oberseite des Bürsteneinsatzes 22 in jeweils einem der Versorgungskanäle 40 münden.

In die Aufnahme 28 ragen ferner drei gleichmäßig über deren Umfang verteilte Rasthaken 46, die nahe der Oberseite des Bürstenkopfes 14 angeordnet sind und von denen in den Fig. 2 und 3 nur der Rasthaken 46 zu sehen ist. Die Rasthaken 46 stehen mit einer am Außenumfang des Bürsteneinsatzes 22 ausgebildeten umlaufenden Nut 48 derart in Eingriff, daß der auf den Lagerzapfen 30 aufgeschobene Bürsteneinsatz 22 in der Aufnahme 28 gehalten ist. Jedem Rasthaken 46 ist ferner ein von der den Bürsteneinsätzen 22 und 24 abgewandten Rückseite des Bürstenkopfes 14 ausgehender Reinigungskanal 50 zugeordnet, der in der Aufnahme 28 endet und dessen Zweck später erläutert wird.

Konzentrisch zur Längsrichtung des Lagerzapfens 30 ist in der Aufnahme 28 ferner eine Vertiefung 52 ausgebildet, in die eine von der Unterseite 36 des Bürsteneinsatzes 22 abstehende, an diese angeformte Stirnverzahnung 54 ragt. Wie insbesondere Fig. 2 zeigt, steht die Stirnverzahnung 54 mit einem Übersetzungszahnrad 56 in Eingriff, das auf einen Lagerstift 58 aufgeschoben und an diesem drehbar gelagert ist. Der Lagerstift 58 ist gleichfalls in den Bürstenkopf 14 eingespritzt und erhebt sich aus einer in die Aufnahme 28 übergehenden Tasche 60. An das Übersetzungszahnrad 56 ist ein Antriebszahnrad 62 kleineren Durchmessers angeformt, das gleichfalls auf dem Lagerstift 58 drehbar gelagert ist. Das Antriebszahnrad 62 steht mit einer Verzahnung 64 der im Kanal 16 geführten Zahnstange 18 in Eingriff (vgl. Fig. 3).

Wie zuvor bereits erläutert, ist der Bürsteneinsatz 24 zum Bürsteneinsatz 22 identisch ausgebildet und in gleicher Weise in einer spiegelsymmetrisch ausgebildeten Aufnahme am Bürstenkopf 14 gelagert, wobei die an der Unterseite des Bürsteneinsatzes 24 ausgebildete Stirnverzahnung (nicht dargestellt) gleichfalls mit dem Übersetzungszahnrad 56 in Eingriff steht. Durch die gemeinsame Kopplung der beiden Bürsteneinsätze 22 und 24 mit dem Übersetzungszahnrad 56 werden die beiden Bürsteneinsätze 22 und 24 bei einer Drehung des Übersetzungszahnrades 56 durch das von der Zahnstange 18 bewegte Antriebszahnrad 62 in entgegengesetzte Drehrichtungen um die jeweiligen Lagerzapfen 30 in den Aufnahmen 28 rotiert, wie durch die Pfeile in Fig. 1 angedeutet ist. Dabei ist die Länge der Verzahnung 64 an der Zahnstange 18 sowie das Übersetzungsverhältnis zwischen dem Antriebszahnrad 62, dem Übersetzungszahnrad 56 und den Stirnverzahnungen 54 so gewählt, daß sich die Bürsteneinsätze 22 und 24 bei einer vollständigen Hubbewegung der Zahnstange 18 um annähernd 360° um die Rotationsachsen R drehen.

Nachfolgend wird die Funktion des Zahnbürstenaufsatzes 10 näher erläutert. Sobald der Benutzer den Zahnbürstenaufsatz 10 an die Mundhygieneeinrichtung angeschlossen und auf die Borsten der Bürsteneinsätze 22 und 24 ausreichend Zahnpasta aufgetragen hat, aktiviert er zunächst die Antriebseinheit der Mundhygieneeinrichtung. Die Antriebsleistung der Antriebseinheit wird von der Kupplungseinrichtung an die Zahnstange 18 übertragen, die sich längs des Kanals 16 hin- und herbewegt. Durch die Hin- und Herbewegung der Zahnstange 18 wird das mit der Verzahnung 64 in Eingriff stehende Antriebszahnrad 62 um den Lagerstift 58 vor- und zurückgedreht. Dabei überträgt das Antriebszahnrad 62 das Drehmoment auf das Übersetzungszahnrad 56, das seinerseits die Drehbewegung an die Stirnverzahnungen 54 der Bürsteneinsätze 22 und 24 weiterleitet, die sich als Folge in entgegengesetzte Drehrichtungen jeweils um annähernd 360° um die Rotationsachsen R hin- und herdrehen.

Wunschgemäß kann der Benutzer nun auch die Pumpeneinheit der Mundhygieneeinrichtung aktivieren. Dabei kann er bei der Pumpeneinheit zwischen einer pulsierenden Förderleistung und einer kontinuierlichen Förderleistung wählen. Die Reinigungsflüssigkeit, bei der es sich beispielsweise um reines Wasser oder um mit einem Zusatz versetztes Wasser handelt, wird von der Pumpeneinheit durch die Kupplungseinrichtung in den Zuführkanal 22 gefördert, von dem sie weiter durch die Durchgangsbohrungen 32 der Lagerzapfen 30 und in die Hohlräume 38 der beiden Bürsteneinsätze 22 und 24 einströmt. Im Hohlraum 38 jedes Bürsteneinsatzes 22 und 24 wird die Reinigungsflüssigkeit auf die vier verschiedenen Versorgungskanäle 40 verteilt, durch die die Reinigungsflüssigkeit in die Spülkanäle 44 einströmt. Die unter Druck stehende Reinigungsflüssigkeit schießt schließlich aus den Spülkanälen 44 durch an der Oberseite jedes Bürsteneinsatzes 22 und 24 ausgebildete Düsenöffnungen 66 (vgl. Fig. 1 und 3), die die austretende Reinigungsflüssigkeit in Längsrichtung der Borstenbündel 26 lenken.

Ist die Zahnreinigung abgeschlossen, schaltet der Benutzer die Mundhygieneeinrichung aus und spült den Zahnbürstenaufsatz 10 unter einem Wasserstrahl aus, wobei die am Bürstenkopf 14 ausgebildeten Reinigungskanäle 50 das Wasser auch in die Aufnahmen 28 der Bürsteneinsätze 22 und 24 leiten, damit auch die Zwischenräume zwischen den Aufnahmen 28 und den Bürsteneinsätzen 22 und 24 gereinigt werden.

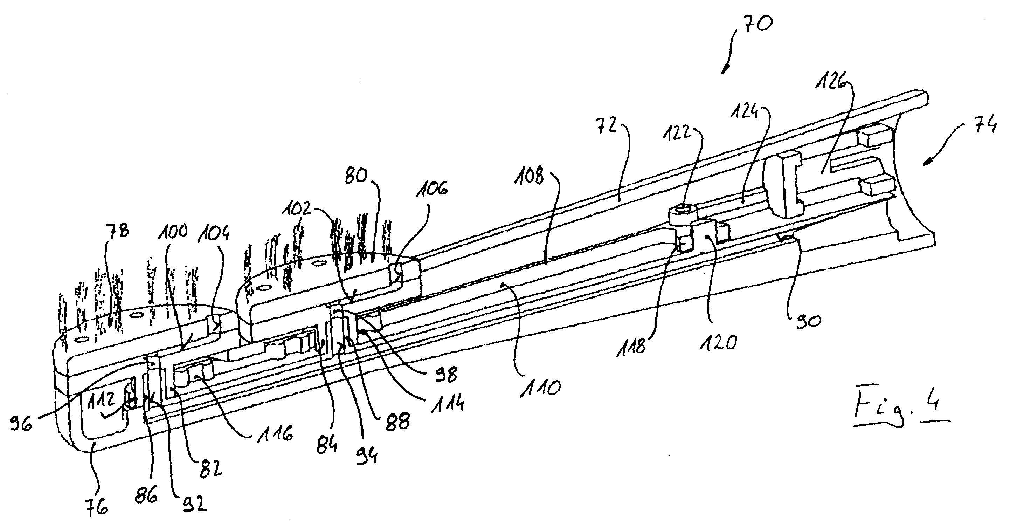

In Fig. 4 ist eine zweite Ausführungsform eines Zahnbürstenaufsatzes 70 für eine Mundhygieneeinrichtung in perspektivischer Darstellung gezeigt. Der Zahnbürstenaufsatz 70 weist gleichfalls einen hohlen Bürstenhals 72 auf, der an seinem einen Ende eine Kupplungseinrichtung 74 zum Ankuppeln an die Mundhygienestation besitzt und dessen anderes Ende in einen Bürstenkopf 76 übergeht. Am Bürstenkopf 76 sind zwei Bürsteneinsätze 78 und 80 drehbar gelagert. Zu diesem Zweck steht von der Unterseite jedes Bürsteneinsatzes 78 bzw. 80 eine Lagerbuchse 82 bzw. 84 ab, mit der der betreffende Bürsteneinsatz 78 bzw. 80 auf einen im Bürstenkopf 76 vorgesehen Lagerzapfen 86 bzw. 88 aufgesteckt und drehbar gelagert ist.

Auch bei dieser Ausführungsform ist im Bürstenhals 72 ein Zuführkanal 90 ausgebildet, der mit in jedem Lagerzapfen 86 und 88 ausgebildeten Durchgangsbohrungen 92 und 94 in Strömungsverbindung steht. Jede Durchgangsbohrung 92 und 94 steht wiederum mit einem im betreffenden Bürsteneinsatz 78 bzw. 80 ausgebildeten Hohlraum 96 bzw. 98 in Strömungsverbindung, von dem mehrere Versorgungskanäle 100 bzw. 102 radial nach außen verlaufen, die in an der Oberseite des jeweiligen Bürsteneinsatzes 78 bzw. 80 endende Spülkanäle 104 bzw. 106 münden.

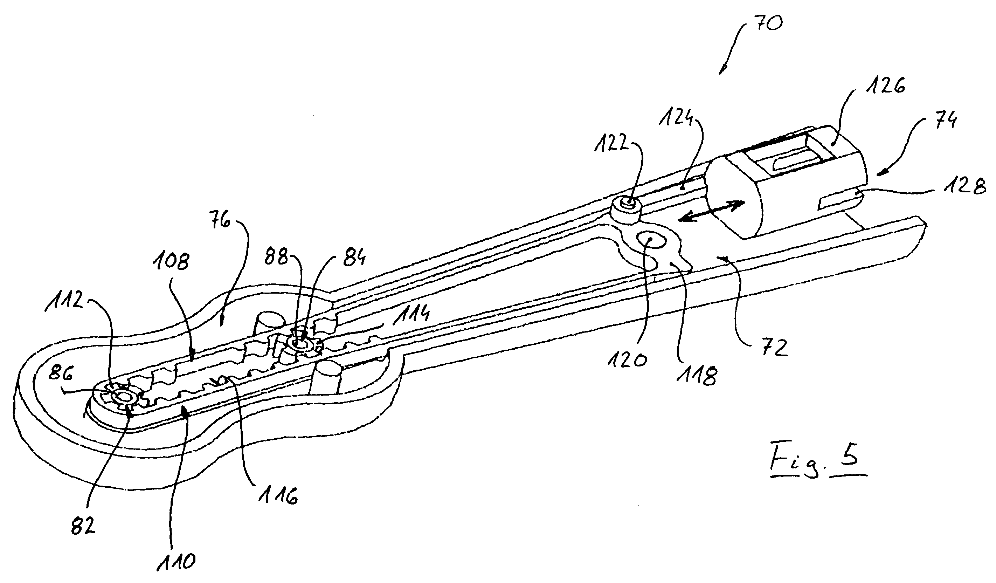

Der Aufbau der Getriebeeinheit 108, mit der die Bürsteneinsätze 78 und 80 angetrieben werden, wird nachfolgend insbesondere unter Bezugnahme auf Fig. 5 näher erläutert. Die Getriebeeinheit 108 weist einen aus einem flexiblen Material gefertigten Antriebsriemen 110 auf, der um den von der Kupplungseinrichtung 74 entfernteren Bürsteneinsatz 78 herumgeführt ist. Sowohl an der Lagerbuchse 82 des vorderen Bürsteneinsatzes 78 als auch an der Lagerbuche 84 des hinteren Bürsteneinsatz 80 ist jeweils eine Verzahnung 112 bzw. 114 ausgebildet, die mit einem an der Innenseite des Antriebsriemens 110 ausgebildeten verzahnten Abschnitt 116 in Eingriff steht.

Die Enden des Antriebsriemens 110 sind zum Beispiel als Wippe 118 ausgeformt, die mit Abstand zum Bürstenkopf 76 im Bürstenhals 72 an einem Zapfen 120 schwenkbar gelagert ist. Von der Oberseite der Wippe 118 steht mit Abstand zum Zapfen 120 ein Anlenkzapfen 122 ab, an dem eine Kopplungsstange 124 eines Kupplungselementes 126 angelenkt ist. Das Kupplungselement 126 ist verschieblich im Bürstenhals 72 gelagert und weist an seinem aus dem Bürstenhals 72 zeigenden Ende eine Kupplung 128 auf, mit der das Kupplungselement 126 an den Antrieb der nicht dargestellten Mundhygieneeinrichtung angeschlossen werden kann. Bei einer Hin- und Herbewegung des Kupplungselementes 126 in Längsrichtung des Bürstenhalses 72 wird die Wippe 118 durch die Kopplungsstange 124 hin und her geschwenkt, wobei der um den vorderen Bürsteneinsatz 78 geführte Antriebsriemen 110 wechselseitig um die Lagerbuchsen 82 und 84 der Bürsteneinsätze 78 und 80 gezogen wird. Die Bewegung des Antriebsriemens 110 wird durch den verzahnten Abschnitt 116 an die Verzahnungen 112 und 114 der Bürsteneinsätze 78 und 80 übertragen, wodurch eine Drehbewegung der beiden Bürsteneinsätze 78 und 80 verursacht wird.

Zur Verwendung wird der Zahnbürstenaufsatz 70 an die Mundhygieneeinrichtung in bekannter Weise angekuppelt, wobei einerseits das Kupplungselement 126 mit dem Antrieb der Mundhygieneeinrichtung gekuppelt wird, während gleichzeitig der Zuführkanal 90 an die Pumpeneinheit der Mundhygieneeinrichtung angeschlossen wird, die den Zahnbürstenaufsatz 70 auch mit Reinigungsflüssigkeit versorgen kann. Während des Betriebes bewegt der Antrieb der Mundhygieneeinrichtung das Kupplungselement 126 hin und her, wodurch die Bürsteneinsätze 78 und 80 in der oben beschriebene Weise gedreht werden. Gleichzeitig kann, sofern erwünscht, Reinigungsflüssigkeit durch den Zuführkanal 90 in die Spülkanäle 104 und 106 der Bürsteneinsätze 78 und 80 gefördert werden.

Bei einer abgewandelten Ausführungsform des zuvor beschriebenen Zahnbürstenaufsatzes 70 wird ein endloser Antriebsriemen verwendet, der um eine im Bürstenhals 72 drehbar gelagerte Umlenkrolle geführt ist. Die Kopplungsstange 124 ist bei dieser Weiterbildung unmittelbar an einem Trum des Antriebsriemens befestigt, um den Antriebsriemen hin und her zu bewegen.

Bei den dargestellten Ausführungsformen sind an jedem Bürsteneinsatz 22 und 24 bzw. 78 und 80 jeweils vier Düsenöffnungen 66 ausgebildet. Selbstverständlich können an jedem Bürsteneinsatz 22 und 24 bzw. 78 und 80 auch weitere Düsenöffnungen mit einer entsprechenden Anzahl Spülkanäle und Versorgungskanäle ausgebildet werden. Des weiteren ist es möglich, Bürsteneinsätze zu verwenden, die zwar in identischer Weise gelagert sind, deren Bürsten sich aber beispielsweise hinsichtlich ihrer Länge oder Festigkeit unterscheiden. Ferner ist es möglich, um die sich rotierenden Bürsteneinsätze 22 und 24 22 und 24 bzw. 78 und 80 zusätzliche Borsten am Bürstenkopf 14 bzw. 76 vorzusehen oder am Bürstenkopf 14 bzw. 76 weitere Düsenöffnungen auszubilden, die gleichfalls mit dem Zuführkanal 20 bzw. 90 verbunden sind.

### Bezugszeichenliste

- 10: Zahnbürstenaufsatz
- 12: Bürstenhals
- 14: Bürstenkopf
- 16: Kanal
- 18: Zahnstange
- 20: Zuführkanal
- 22: Bürsteneinsatz
- 24: Bürsteneinsatz
- 26: Borstenbündel
- 28: Aufnahme
- 30: Lagerzapfen
- 32: Durchgangsbohrung
- 34: Aufnahmebohrung
- R: Rotationsachse
- 36: Unterseite
- 38: Hohlraum
- 40: Versorgungskanäle
- 42: Verschlußelemente
- 44: Spülkanäle
- 46: Rasthaken
- 48: Nut
- 50: Reinigungskanäle
- 52: Vertiefung
- 54: Stirnverzahnung
- 56: Übersetzungszahnrad
- 58: Lagerstift
- 60: Tasche
- 62: Antriebszahnrad
- 64: Verzahnung
- 66: Düsenöffnungen
- 70: Zahnbürstenaufsatz
- 72: Bürstenhals
- 74: Kupplungseinrichtung
- 76: Bürstenkopf
- 78: Bürsteneinsatz
- 80: Bürsteneinsatz
- 82: Lagerbuchse
- 84: Lagerbuchse
- 86: Lagerzapfen
- 88: Lagerzapfen
- 90: Zuführkanal
- 92: Durchgangsbohrung
- 94: Durchgangsbohrung
- 96: Hohlraum
- 98: Hohlraum
- 100: Versorgungskanal
- 102: Versorgungskanal
- 104: Spülkanal
- 106: Spülkanal
- 108: Getriebeeinheit
- 110: Antriebsriemen
- 112: Verzahnung
- 114: Verzahnung
- 116: verzahnter Abschnitt
- 118: Wippe
- 120: Zapfen
- 122: Anlenkzapfen
- 124: Kopplungsstange
- 126: Kupplungselement
- 128: Kupplung

## Patentansprüche

1. Zahnbürstenaufsatz für eine Mundhygieneeinrichtung, insbesondere eine Mundhygienestation,
mit einem Bürstenhals (12; 72), an dem eine Kupplung (74) zum Ankuppeln an eine Antriebseinheit der Mundhygieneeinrichtung ausgebildet ist,
mit einem Bürstenkopf (14; 76) am freien Ende des Bürstenhalses (12; 72), an dem mindestens ein antreibbarer Bürsteneinsatz (22; 78) gelagert ist, und
mit einer Getriebeeinheit (18, 54, 56, 62, 64; 108) für den Bürsteneinsatz (22; 78) zum Übertragen der Antriebsleistung der Antriebseinheit von der Kupplung (74) an den Bürsteneinsatz (22; 80),
dadurch **gekennzeichnet,**
daß der Bürsteneinsatz (22; 80) mit einem Bewegungswinkel von mindestens 180° um seine Rotationsachse (R) von der Getriebeeinheit (18, 54, 56, 62, 64; 108) antreibbar ist.

2. Zahnbürstenaufsatz nach Anspruch 1,
dadurch **gekennzeichnet**,
daß mindestens ein weiterer Bürsteneinsatz (24; 80) am Bürstenkopf (14; 76) insbesondere drehbar gelagert ist.

3. Zahnbürstenaufsatz nach Anspruch 2,
dadurch **gekennzeichnet,**
daß der weitere Bürsteneinsatz (24; 80) gleichfalls von der Getriebeeinheit (18, 54, 56, 62, 64; 110, 126) vorzugsweise mit einem Bewegungswinkel von mindestens 180° um seine Rotationsachse antreibbar ist.

4. Zahnbürstenaufsatz nach Anspruch 2 oder 3,
dadurch **gekennzeichnet ,**
daß die beiden Bürstenseinsätze (22, 24) gegenläufig antreibbar sind.

5. Zahnbürstenaufsatz nach einem der Ansprüche 1 bis 4,
dadurch **gekennzeichnet ,**
daß die Getriebeeinheit eine sich in Längsrichtung des Bürstenhalses (12) erstreckende Zahnstange (18) aufweist, die mit ihrem einen Ende zum Hin- und Herbewegen in ihrer Längsrichtung an die Antriebseinheit ankuppelbar ist und nahe ihrem anderen Ende eine Verzahnung (64) aufweist, die mit einem Antriebsrad für jeden Bürsteneinsatz (22, 24) bzw. mit einem gemeinsamen Antriebsrad (62) für die Bürsteneinsätze (22, 24) in Eingriff steht.

6. Zahnbürstenaufsatz nach Anspruch 5,
dadurch **gekennzeichnet ,**
daß im Bürstenkopf (14) ein Lagerstift (58) vorgesehen ist, an dem das Antriebsrad (62) und ein starr mit diesem verbundenes Übersetzungsrad (56) drehbar gelagert sind, wobei das Übersetzungsrad (56) mit einer an der dem Bürstenkopf (14) zugewandten Unterseite (36) des jeweiligen Bürsteneinsatzes (22, 24) ausgebildeten Verzahnung (54) in Eingriff steht.

7. Zahnbürstenaufsatz nach einem der Ansprüche 1 bis 6,
dadurch **gekennzeichnet**,
daß die Getriebeeinheit (108) einen Antriebsriemen (110) aufweist, der um eine im Bürstenkopf (76) vorgesehene Umlenkstelle geführt ist und mit dem Bürsteneinsatz (78) bzw. mit den Bürsteneinsätzen (78, 80) zum Antrieb in Wirkverbindung steht.

8. Zahnbürstenaufsatz nach Anspruch 7,
dadurch **gekennzeichnet ,**
daß der Antriebsriemen (110) zumindest abschnittsweise verzahnt ist und mit seinem verzahnten Abschnitt (116) mit einer an dem Bürsteneinsatz (78) bzw. an jedem Bürsteneinsatz (78, 80) ausgebildeten Verzahnung (112, 114) in Eingriff steht.

9. Zahnbürstenaufsatz nach Anspruch 8,
dadurch **gekennzeichnet,**
daß der Antriebsriemen (110) um die Verzahnung (112) des am entferntesten zur Kupplung (74) vorgesehenen Bürsteneinsatzes (78) geführt ist, der als Umlenkstelle dient.

10. Zahnbürstenaufsatz nach Anspruch 7, 8 oder 9,
dadurch **gekennzeichnet,**
daß der Antriebsriemen (110) in eine im Bürstenhals (72) schwenkbar gelagerte Wippe (118) übergeht.

11. Zahnbürstenaufsatz nach Anspruch 10,
dadurch **gekennzeichnet ,**
daß im Bürstenhals (72) ein Antriebselement (126) verschieblich gelagert ist, das exzentrisch zur Lagerstelle der Wippe (118) an der Wippe (118) angelenkt ist.

12. Zahnbürstenaufsatz nach einem der vorhergehenden Ansprüche,
dadurch **gekennzeichnet ,**
daß am Bürstenkopf (14) für jeden Bürsteneinsatz (22, 24) eine Aufnahme (28) vorgesehen ist, an der mindestens drei, vorzugsweise gleichmäßig über den Umfang der Aufnahme (28) verteilte Rasthaken (46) ausgebildet sind, die mit einer am jeweiligen Bürsteneinsatz (22, 24) ausgebildeten Rastnut (48) in Eingriff stehen.

13. Zahnbürstenaufsatz nach einem der Ansprüche 6 bis 12,
dadurch **gekennzeichnet ,**
daß im Bürstenkopf (22, 24) Reinigungskanäle (50) ausgebildet sind, die von der der Aufnahme (28) abgewandten Rückseite des Bürstenkopfes (14) ausgehen, sich durch den Bürstenkopf (14) erstrecken und in der Aufnahme (28) münden, wobei vorzugsweise jeweils ein Reinigungskanal (50) einem Rasthaken (46) zugeordnet ist und nahe diesem endet.

14. Zahnbürstenaufsatz nach einem der vorhergehenden Ansprüche,
dadurch **gekennzeichnet**,
daß in jedem Bürsteneinsatz (22, 24; 78, 80) mindestens ein Spülkanal (44; 104, 106) ausgebildet ist, der sich durch den Bürsteneinsatz (22, 24; 78, 80) erstreckt und an der mit den Borsten (26) versehenen Oberseite des Bürsteneinsatzes (22, 24; 78, 80) endet, und
daß im Bürstenhals (12; 72) ein mit einer Pumpeneinheit der Mundhygieneeinrichtung verbindbarer Zuführkanal (20; 90) für eine Reinigungsflüssigkeit ausgebildet ist, der im Bürstenkopf (14; 76) endet und mit dem Spülkanal (44; 104, 106) des Bürsteneinsatzes (22, 24; 78, 80) in Strömungsverbindung steht.

15. Zahnbürstenaufsatz nach Anspruch 14,
dadurch **gekennzeichnet ,**
daß der Zuführkanal (20; 90) mit einem als Lagerstelle für den Bürsteneinsatz (22, 24; 78, 80) dienenden hohlen Lagerzapfen (30; 86, 88) verbunden ist, der bei an dem Lagerzapfen (30; 86, 88) gelagertem Bürsteneinsatz (22, 24; 78, 80) mit dem Spülkanal (44; 104, 106) in Strömungsverbindung steht.

16. Zahnbürstenaufsatz nach Anspruch 14 oder 15,
dadurch **gekennzeichnet ,**
daß im Bürsteneinsatz (22, 24; 78, 80) konzentrisch zu seiner Rotationsachse (R) ein Hohlraum (38; 96, 98) ausgebildet ist, der mit dem Zuführkanal (20; 90) im Bürstenhals (12; 72) und durch einen von der Unterseite (26) des Bürsteneinsatzes (22, 24; 78, 80) ausgehenden, schräg durch diesen verlaufenden Versorgungskanal (40; 100, 102) mit dem Spülkanal (44; 104, 106) Strömungsverbindung steht, wobei der an der Unterseite (26) des Bürsteneinsatzes (22, 24; 78, 80) endende Versorgungskanal (40; 100, 102) vorzugsweise durch ein Verschlußelement (42) verschlossen ist.

17. Zahnbürstenaufsatz nach einem der vorhergehenden Ansprüche,
dadurch **gekennzeichnet,**
daß zumindest der Bürsteneinsatz (22, 24; 78, 80) als Kunststoffspritzteil ausgebildet ist.

18. Mundhygieneeinrichtung mit einer Antriebseinheit und einem Zahnbürstenaufsatz (10; 70) nach einem der vorhergehenden Ansprüche, der an die Antriebseinheit vorzugsweise lösbar angekuppelt ist.

19. Mundhygieneeinrichtung nach Anspruch 18,
**gekennzeichnet**,
durch eine Pumpeneinheit zum Pumpen einer Reinigungsflüssigkeit, vorzugsweise Wasser, die mit einem im Bürstenhals (12; 72) des Zahnbürstenaufsatzes (10; 70) ausgebildeten Zuführkanal (20; 90) lösbar verbunden ist, wobei der Zuführkanal (20; 90) mit mindestens einem an der mit Borsten (26) versehenen Oberseite des Bürsteneinsatzes (22, 24; 78, 80) des Zahnbürstenaufsatzes (10; 70) endenden Spülkanal (44; 104, 106) in Strömungsverbindung steht.
